(19) Europäisches Patentamt
European Patent Office
Office européen des brevets

(11) Publication number: **0 214 836**
**A1**

(12) # EUROPEAN PATENT APPLICATION

(21) Application number: 86306813.6

(51) Int. Cl.⁴: **G 06 F 7/50**

(22) Date of filing: 03.09.86

(30) Priority: 11.09.85 US 774695

(43) Date of publication of application:
18.03.87 Bulletin 87/12

(84) Designated Contracting States:
DE FR GB IT NL

(71) Applicant: SPERRY CORPORATION
1290, Avenue of the Americas
New York, N.Y. 10019(US)

(72) Inventor: Anderson, Bruce Michael
2402 West Kathleen Road
Phoenix Arizona 85023(US)

(72) Inventor: Broderick, Brian Edward
1590 Glendale Court Rio Grande
Albuquerque New Mexico(US)

(74) Representative: Singleton, Jeffrey et al,
ERIC POTTER & CLARKSON 27 South Street
Reading Berkshire, RG1 4QU(GB)

(54) **Carry select adder.**

(57) Apparatus for binary addition which reduces propagation delay by generating two conditional sum outputs. The correct sum is then gated to the output by the carry input signal.

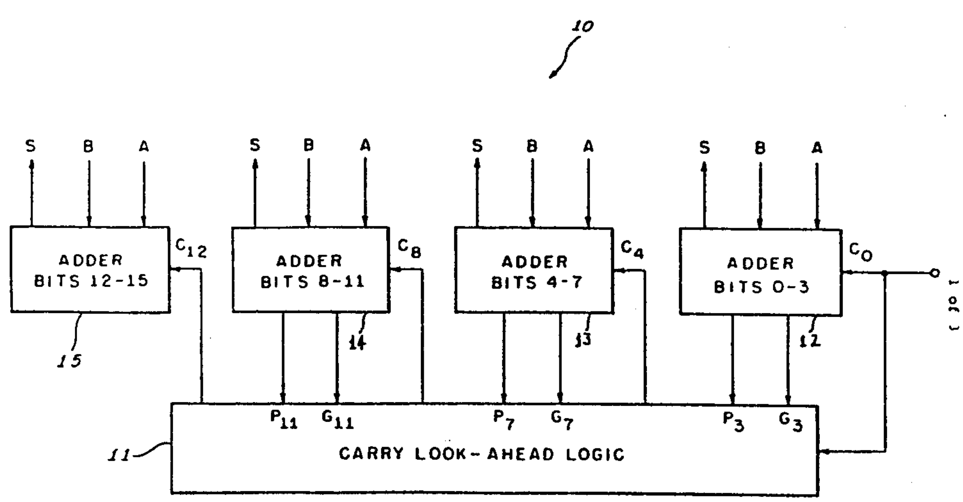


FIG.1.

EP 0 214 836 A1

Croydon Printing Company Ltd.

# CARRY SELECT ADDER

The present invention relates generally to the field of digital computer hardware, and more specifically to a circuit for performing digital addition.

The execution time for binary addition is the limiting factor in the performance of many digital circuits. Addition can be implemented with multiple single-bit adder circuits, so that each circuit generates a sum and a carry output for a single bit position. However, this approach is slow for the addition of large words, since the worst-case delay requires that the carry must sequentially ripple through each bit position. High-performance adders make use of the "carry look-ahead" technique to minimise the delay required for the carry logic. Although a single level of carry look-ahead is impractical for large word sizes, due to a limited number of inputs for the logic circuits, a multiple level of look-ahead logic can be used to provide full carry look-ahead logic for large adders.

Using multiple level look-ahead logic, the adder is first divided into a number of sections. Each section is comprised of a number of contiguous adder bits (usually from 4 to 8 bits), and each section is designed internally with the full carry look-ahead technique. With the exception of that section comprising the most significant bits of the adder, each adder section is also designed to supply "carry generate" and "carry propagate" outputs for the contiguous bits of the section. These signals can then be used by a second level of carry look-ahead logic to generate the carry input signals to each of the adder sections. With a very large word size (e.g. 32 to 64 bits), three separate levels of carry look-ahead logic may be required to achieve maximum performance. The present invention improves the performance of binary addition with a modification to the full look-ahead adder circuit.

The present invention is defined in the appended claims and provides an improved circuit for generating the sum outputs from adder sections that use carry look-ahead logic. The adder section generates two conditional sum outputs. The correct sum is gated to the adder output by the carry input to the adder section. Overall propagation delay is thereby reduced since the conditional sums are generated simultaneously with the generation of the carry inputs.

Apparatus for performing binary addition in accordance with the present invention will now be described in greater detail, by way of example, with reference to the accompanying drawings, in which:-

Figure 1 illustrates a typical 16 bit binary adder, and

Figure 2 (comprised of Figures 2a and 2b) is a detailed logic diagram illustrating the preferred embodiment for one section of the typical 16-bit adder shown in Figure 1.

Referring to Figure 1, a 16-bit adder 10 using second level carry look-ahead logic 11 is divided into four sections 12, 13, 14, 15 of 4-bits each. The carry inputs $C_4$, $C_8$, $C_{12}$ of sections 13, 14 and 15 are derived from carry look-ahead logic 11. The following equations define operation of adder 10.

The sum outputs for each 4-bit adder section 12, 13, 14 and 15 are given by the following equations:-

(with $\oplus$ = EXOR, . = AND, + = OR):

$$S_i = A_i \oplus B_i \oplus C_i$$

$$S_{i+1} = A_{i+1} \oplus B_{i+1} \oplus [g_i + (p_i \cdot C_i)]$$

$$S_{i+2} = A_{i+2} \oplus B_{i+2} \oplus [g_{i+1} + (p_{i+1} \cdot g_i) + (p_{i+1} \cdot p_i \cdot C_i)]$$

$$S_{i+3} = A_{i+3} \oplus B_{i+3} \oplus [g_{i+2} + (p_{i+2} \cdot g_{i+1}) + (p_{i+2} \cdot p_{i+1} \cdot g_i) + (p_{i+2} \cdot p_{i+1} \cdot p_i \cdot C_i)],$$

where "i" is the least significant bit of the 4-bit section; $C_i$ is the carry input to the 4-bit section; and g and p are the internal generate and propagate signals, respectively. The signals g and p are defined as follows:

$g_i = A_i \cdot B_i$

$p_i = A_i + B_i$

The generate and propagate signals from a 4-bit adder section will be designated as $G_{i+3}$ and $P_{i+3}$, respectively, where bit position "i" is the least significant bit of the 4-bit section. They are given by the following:

$G_{i+3} = g_{i+3} + (p_{i+3} \cdot g_{i+2}) + (p_{i+3} \cdot p_{i+2} \cdot g_{i+1}) + (p_{i+3} \cdot p_{i+2} \cdot p_{i+1} \cdot g_i)$

$P_{i+3} = p_{i+3} \cdot p_{i+2} \cdot p_{i+1} \cdot p_i$

Note that capital letters G and P have been used to designate the external generate and propagate signals; and lower case letters g and p are used for the internal generate and propagate signals of the 4-bit adder sections.

The carry inputs to the 4-bit adder sections are generated from the external look-ahead logic and are given by:-

$C_4 = G_3 + (P_3 \cdot C_0)$

$C_8 = G_7 + (P_7 \cdot G_3) + (P_7 \cdot P_3 \cdot C_0)$

$C_{12} = G_{11} + (P_{11} \cdot G_7) + (P_{11} \cdot P_7 \cdot G_3) + (P_{11} \cdot P_7 \cdot P_3 \cdot C_0)$.

The longest delay path through adder 10 from the A and B inputs to the S (sum) outputs is through the external carry look-ahead logic 11. The total delay through adder 10 is comprised of three component delays. The first component delay is from the A and B inputs to the G and P outputs of each 4-bit adder 12, 13, 14, 15. As can be seen in Figure 2, the first delay is typically composed of three gate delays. The second component delay is through the external carry look-ahead logic 11 to the carry inputs $C_4$, $C_8$, $C_{12}$ of the 4-bit adder sections 13, 14 and 15. From equations for $C_4$, $C_8$, and $C_{12}$, it can be seen that the second component delay is composed of two gate delays. The final delay component is from the carry inputs $C_0$, $C_4$, $C_8$, $C_{12}$ to the S (sum) outputs of the 4-bit adder sections 12, 13, 14, 15. The final delay typically requires three gate delays. Thus, there are a total of eight gate delays in the worst case path through the adder 10.

Referring now to Figure 2, the present invention implements a reduction in the final component delay (i.e., the delay from carry input C to the sum outputs $S_i$, $S_{i+1}$, $S_{i+2}$, $S_{i+3}$ of adder section 12, 13, 14, 15), and thus in the overall delay. Each adder section 12, 13, 14, 15 is configured to solve for two sums for each set of iputs $A_i$ and $B_i$ through $A_{i+3}$ and $B_{i+3}$. The sums for inputs $A_i$ and $B_i$ appear on leads 20 and 21; the sums for inputs $A_{i+1}$ and $B_{i+1}$ appear on leads 22 and 23; the sums for $A_{i+2}$ and $B_{i+2}$ appear on leads 24 and 25; and the sums for $A_{i+3}$ and $B_{i+3}$ appear on leads 26 and 27. The sums appearing on leads 20, 22, 24 and 26 are derived on the assumption that the carry input $C_i=0$. The sums appearing on leads 21, 23, 25 and 27 are derived on the assumption that carry the input $C_i=1$.

Thus, when $C_i=0$, sums appearing on leads 20, 22, 24 and 26 are respectively:

$$S_i=A_i \oplus B_i$$
$$S_{i+1} = A_{i+1} \oplus B_{i+1} \oplus g_i$$
$$S_{i+2} = A_{i+2} \oplus B_{i+2} \oplus [g_{i+1} \oplus (p_{i+1} \cdot g_i)]$$
$$S_{i+3} = A_{i+3} \oplus B_{i+3} \oplus [g_{i+2} \oplus (p_{i+2} \cdot g_{i+1}) + (p_{i+2} \cdot p_{i+1} \cdot g_i)]$$

When $C_i=1$, the sums appearing on leads 21, 23, 25 and 27 are respectively:

$$S_i = A_i \oplus B_i$$
$$S_{i+1} = A_{i+1} \oplus B_{i+1} \oplus p_i$$
$$S_{i+2} = A_{i+2} \oplus B_{i+2} \oplus [g_{i+1} + (p_{i+1} \cdot p_i)]$$

$$S_{i+3} = A_{i+3} + B_{i+3} \oplus [g_{i+2} + (p_{i+2} \cdot g_{i+1}) + (p_{i+2} \cdot p_{i+1} \cdot p_i)]$$

The equations for $C_i$=1 have been simplified since the term $p_i + g_i$ is equivalent to $p_i$ when $C_i$=1. Sums appearing on leads 20 and 21 are supplied to a multiplexer AND-OR-INVERT (AOI) circuit 30. Sums appearing on leads 22 and 23 are supplied to an AOI circuit 31, sums appearing on leads 24 and 25 are supplied to an AOI circuit 32 and sums appearing on leads 26 and 27 are supplied to an AOI circuit 33. The carry input $C_i$ is also supplied to each AOI circuit 30, 31, 32, 33 and is used to select which of the two sums supplied to each AOI circuit is gated through the AOI circuit. Because the input sums to each AOI circuit 30, 31, 32, 33 are generated simultaneously with carry input $C_i$, there is an overall reduction in the delay times in the adder sections 12, 13, 14 and 15. Specifically, the worst case adder delay has been reduced from eight to seven gate delays by use of the present invention.

Claims

1. Apparatus for performing binary addition having a plurality of adder sections (12, 13, 14, 15) in which signals representative of carry inputs to the adder sections are derived from a multiple level carry look-ahead logic (11), characterised in that the apparatus further comprises for each adder section (12, 13, 14, 15) binary addition means for providing a first (20, 22, 24, 26) and second (21, 23, 25, 27) conditional sum output, the first sum output being representative of a carry input signal equal to zero, said second sum output being representative of a carry input signal equal to one, and multiplex means (30, 31, 32, 33) coupled to receive the first and second conditional sums and a carry input signal, and operable to provide an output of the first sum when the carry input signal equals zero, and an output of the second sum when the carry input signal equals one.

2. An apparatus according to claim 1, characterised in that the apparatus comprises four adder sections (12, 13, 14, 15).

3. An apparatus according to claim 2, characterised in that the first conditional sum output from each of the four adder sections (12, 13, 14, 15) is defined for a carry input signal equal to zero as:

$S_i = A \oplus B$

$S_{i+1} = A_{i+1} \oplus B_{i+1} \oplus g_i$

$S_{i+2} = A_{i+2} \oplus B_{i+2} \oplus [g_{i+} + (p_{i+1} \cdot g_i)]$

$S_{i+3} = A_{i+3} \oplus B_{i+3} \oplus [g_{i+2} + (p_{i+2} \cdot g_{i+1}) + (p_{i+2} \cdot p_{i+1} \cdot g_i)]$

and the second conditional sum output from each of the four adder sections is defined for a carry input signal equal to one as:

$S_i = A_i \oplus B_i$

$S_{i+1} = A_{i+1} \oplus B_{i+1} \oplus p_i$

$S_{i+2} = A_{i+2} \oplus B_{i+2} \oplus [g_{i+1} + (p_{i+1} \cdot p_i)]$

$$S_{i+3} = A_{i+3} \oplus B_{i+3} \oplus [g_{i+2} + (p_{i+2} \cdot g_{i+1}) + (p_{i+2} \cdot p_{i+1} \cdot p_i)]$$

where

A and B = inputs to be added

$\underline{i}$ = least significant bit

$g_i = A . B$

$p_i = A + B$

$\oplus$ = exclusive OR operation

. = AND operation

\+ = OR operation

4. Apparatus according to any of the preceding claims, characterised in that the multiplex means (30, 31, 32, 33) comprises a first AND circuit for accepting an input of the first conditional sum signal and the carry input signal equal to zero, a second AND circuit for accepting an input of the second conditional sum signal and the carry input signal equal to one, and an OR invert circuit for accepting outputs of the first and second AND circuits and for providing a signal representative of an inverted first conditional sum when the carry signal equals zero, and an inverted second conditional sum when the carry signal equals one.

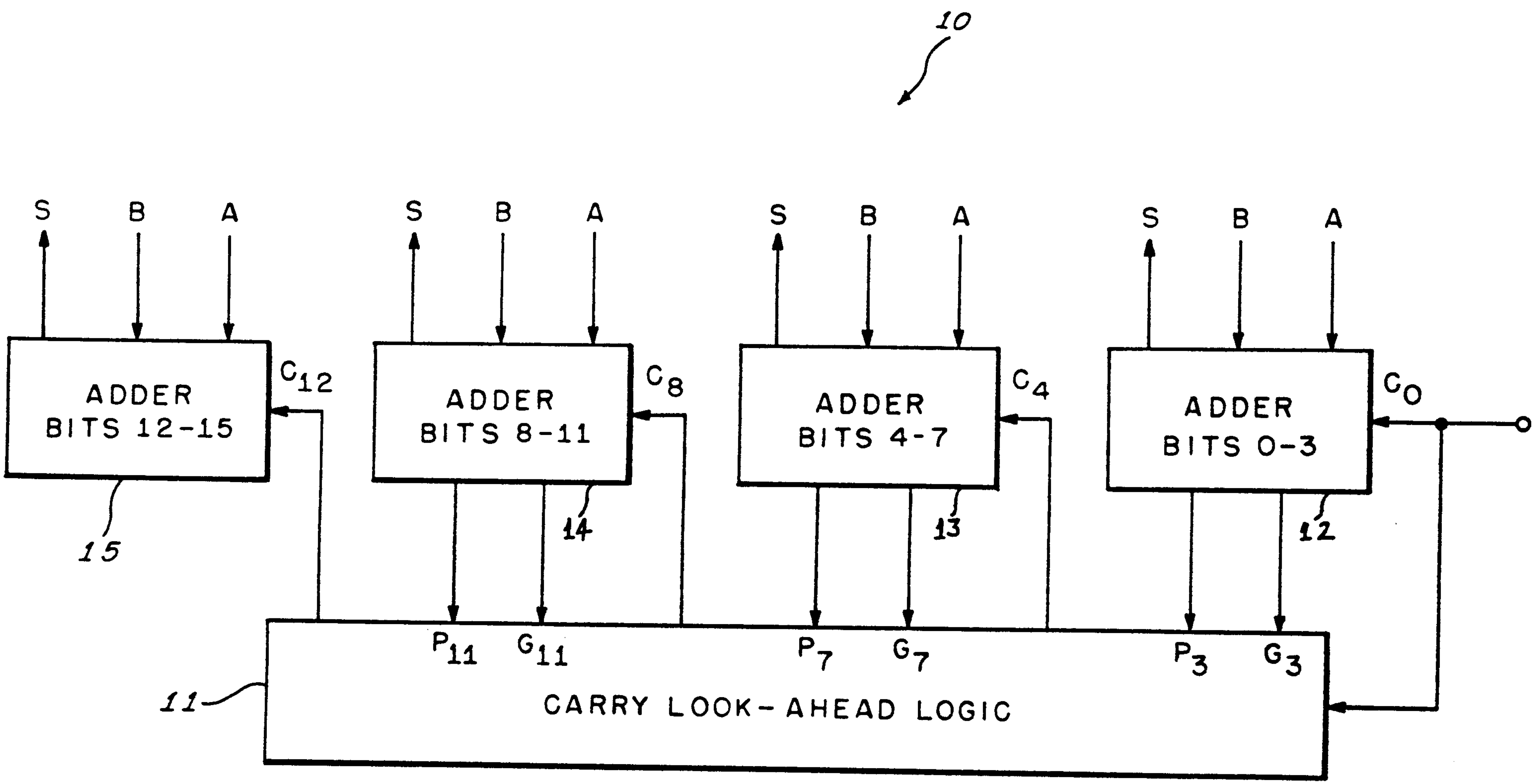
10
S
B
A
ADDER
BITS 12-15
ADDER
BITS 8-11
ADDER
BITS 4-7
ADDER
BITS 0-3
$C_{12}$
$C_8$
$C_4$
$C_0$
15
14
13
12
11
$P_{11}$
$G_{11}$
$P_7$
$G_7$
$P_3$
$G_3$
CARRY LOOK-AHEAD LOGIC

FIG.1.

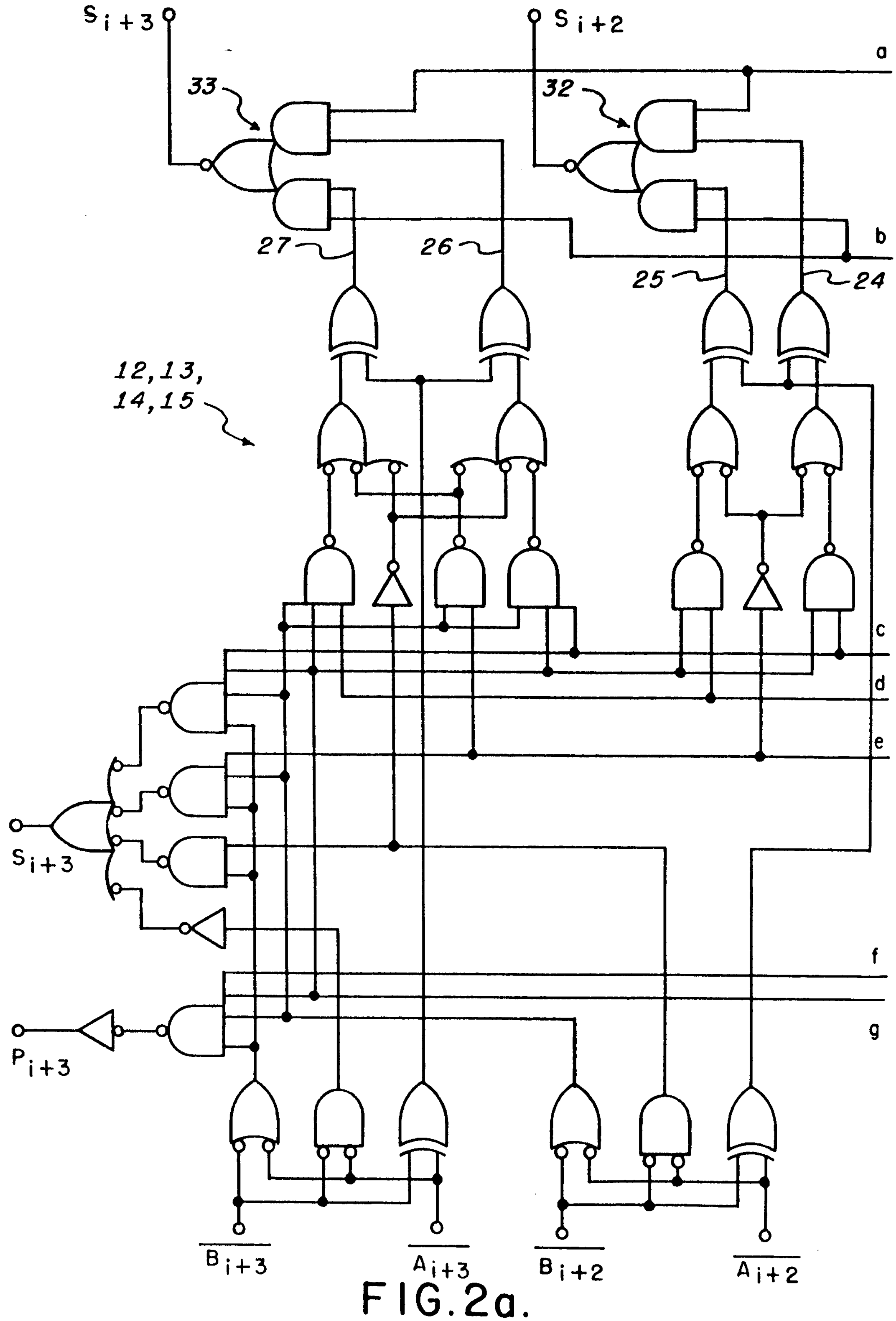
$S_{i+3}$
$S_{i+2}$
a
33
32
b
27
26
25
24
12,13,
14,15
c
d
e
$S_{i+3}$
f
$P_{i+3}$
g
$\overline{B_{i+3}}$
$\overline{A_{i+3}}$
$\overline{B_{i+2}}$
$\overline{A_{i+2}}$

FIG.2a.

FIG.2b.

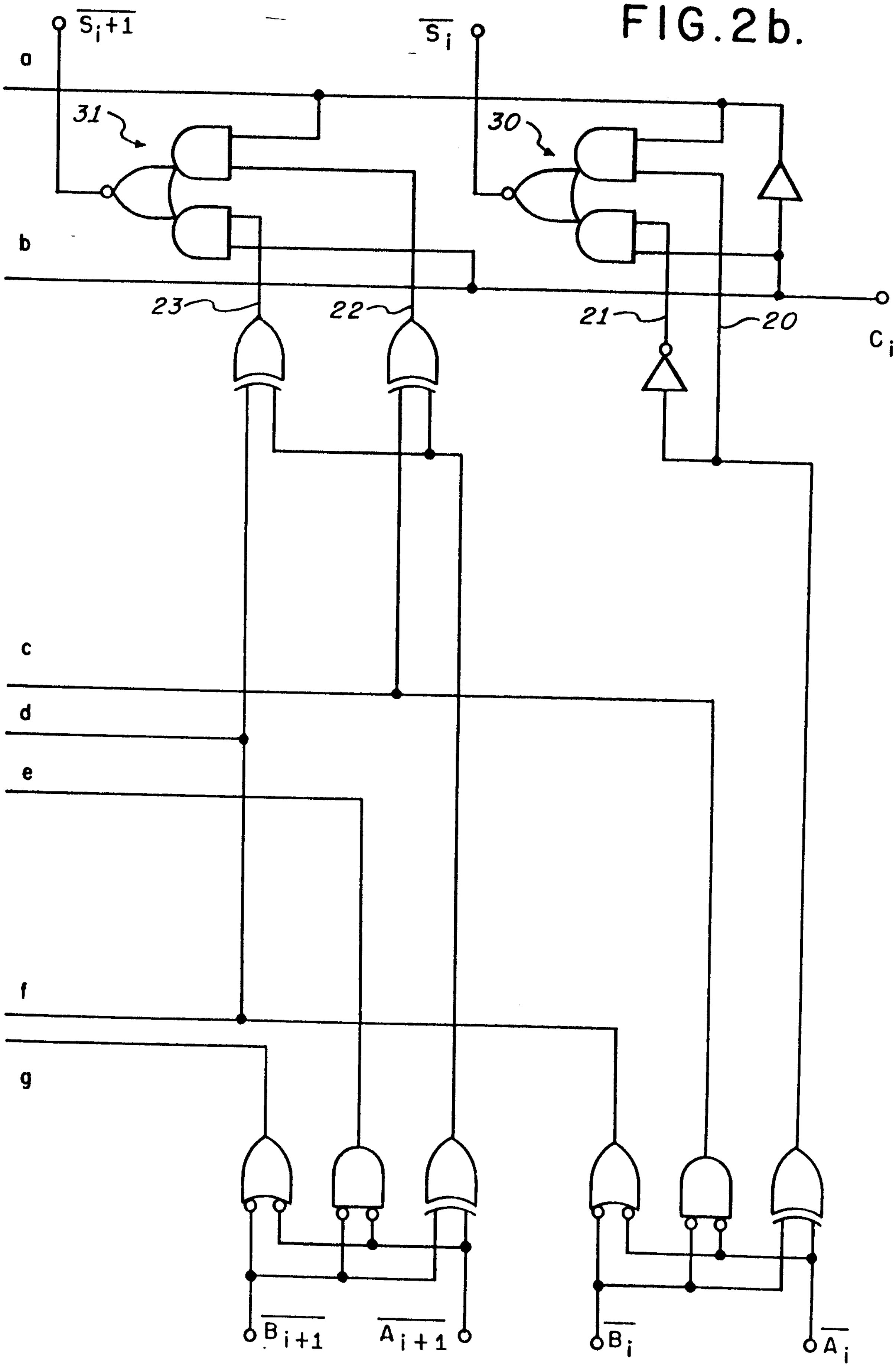
$\overline{S_i+1}$
$\overline{S_i}$
a
31
30
b
23
22
21
20
$C_i$
c
d
e
f
g
$\overline{B_{i+1}}$
$\overline{A_{i+1}}$
$\overline{B_i}$
$\overline{A_i}$

European Patent Office

# EUROPEAN SEARCH REPORT

0214836

Application number

EP 86 30 6813

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | US-A-3 100 835 (I.B.M.)<br>* Column 3, line 49 - column 6, line 53; figures 2-8 * | 1,4 | G 06 F 7/50 |
| Y | | 1-4 | |
| | --- | | |
| Y | IBM TECHNICAL DISCLOSURE BULLETIN, vol. 12, no. 11, April 1970, pages 1800,1801, New York, US; E.C. DUNN et al.: "Arithmetic unit using table look-up"<br>* Whole document; figure * | 1-4 | |
| | ----- | | |

| TECHNICAL FIELDS SEARCHED (Int Cl 4) |
|---|
| G 06 F 7/00 |

The present search report has been drawn up for all claims

| Place of search | Date of completion of the search | Examiner |
|---|---|---|
| THE HAGUE | 28-11-1986 | NUSSBAUMER C.P. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document